# EUROPEAN PATENT APPLICATION

(11) **EP 4 376 238 A1**
(43) Date of publication of application: **29.05.2024**
(21) Application number: 22208912.0
(22) Date of filing: 22.11.2022
(51) Int. Cl.: H02G 1/14, B29C 61/10, H02G 15/18, H02G 3/04

(54) **SPLIT TUBING WITH INTEGRATED LOCK AND EXPANSION MANUFACTURING METHOD**

(71) Applicant: TE Connectivity India Private Limited, K.R. Puram Hobli, Bangalore 560066 (IN); TE Connectivity Solutions GmbH, 8200 Schaffhausen (CH); Tyco Electronics UK Limited, Swindon, Wiltshire SN3 5HH (GB); TE Connectivity Trutnov s.r.o., Strední Predmestí 54101 Trutnov (CZ)
(72) Inventor: PAKZAD, Reza, SWINDON, SN3 5HH (GB); KNIGHT, Jeffrey, 8200 Schaffhausen (CH); HAMPAPA, Bretislav, 54101 TRUTNOV (CZ); BALASUBRAMANIAN, Selvapandian, 560066 Bangalore (IN); SMITH, Kaylie Jane, SWINDON, SN3 5HH (GB); KEWELL, Richard, SWINDON, SN3 5HH (GB)
(74) Representative: Grünecker Patent- und Rechtsanwälte PartG mbB

(57) **Abstract**

The present disclosure relates to a heat shrinkable wrap 1, 10 comprising a body 6, 60 comprising two longitudinal edges 7, 8, 70, 80 and two transverse edges; a first locking feature 2, 20 which expands along a first longitudinal edge 7, 70 and a second locking feature 4, 40 which expands along a second longitudinal edge 8, 80; wherein the body 6, 60 comprises a heat shrink material; wherein the first locking feature 2, 20 at the first longitudinal edge 7, 70 comprises at least two first locking elements 3, 30 which expand along the first longitudinal edge 7, 70 and the second locking feature 4, 40 at the second longitudinal edge 8, 80 comprises at least two second locking elements 5, 50 which expand along the second longitudinal edge 8, 80; wherein the first locking elements 3, 30 and the second locking elements 5, 50 are adapted for engaging with each other, for establishing, in an engaged state, at least two connections between the first locking feature 2, 20 and the second locking feature 4, 40; wherein, when the connection between the first locking feature 2, 20 and the second locking feature 4, 40 is established, the body 6, 60 and the locking features 2, 20, 4, 40 form a tubular structure.

## Description

The present disclosure relates to heat shrinkable wraps which are used for bundling and sealing wire harness applications. More specifically, it relates to a split tubing with integrated lock and an expansion manufacturing method.

Heat shrink tubes are widely used for a variety of applications for harness and terminal end protection. However, it is not always possible to apply a heat shrink tube on the substrate where there is an access issue or space restrictions. Especially when the substrate is in the shape of loop or does not have an open end. For example heat shrink tubes cannot be used when they must be slid over a large bulky wire harness connector head or wire harness bundles. Currently, solutions like wrapable sleevings, spiral wrap tubings, split loom tubings, and self adhesive tape are being used for wire harness bundles. However, in contrast to heat shrink products, these solutions do not take the shape of the underlying wire harness substrate.

Thus, there is a need for a heat shrink product which can be applied in such challenging environments.

This problem is solved by the subject matter of the independent claims. Advantageous examples of the present disclosure are presented in the dependent claims.

The present disclosure relates to a heat shrinkable wrap comprising a body comprising two longitudinal edges and two transverse edges; a first locking feature which expands along a first longitudinal edge and a second locking feature which expands along a second longitudinal edge; wherein the body comprises a heat shrink material; wherein the first locking feature at the first longitudinal edge comprises at least two first locking elements which expand along the first longitudinal edge and the second locking feature at the second longitudinal edge comprises at least two second locking elements which expand along the second longitudinal edge; wherein the first locking elements and the second locking elements are adapted for engaging with each other, for establishing, in an engaged state, at least two connections between the first and the second locking feature; wherein, when the connection between the first and the second locking feature is established, the body and the locking features form a tubular structure.

The advantage of the present disclosure is that it can be used with wire bundles which have large bulky wire harness connectors, because it is not necessary to slide the heat shrinkable wrap over the large bulky wire harness connectors. Moreover, the present disclosure can be used when there are space constraints which do not allow for using regular heat shrink tubes.

The advantage of using at least two first locking elements which expand along the first longitudinal edge and at least two second locking elements which expand along the second longitudinal edge for connecting the two longitudinal edges allows for a continuous and secure connection of the two longitudinal edges.

In an example of the heat shrinkable wrap, the two locking features are adapted for establishing a formfitting connection between the first and the second locking feature, the formfitting connection between the first and the second locking feature comprising the at least two connections between the first and second locking elements in the engaged state.

In another example of the heat shrinkable wrap, the two locking features are adapted for establishing a forcefitting connection between the first and the second locking feature, the forcefitting connection between the first and the second locking feature comprising the at least two connections between the first and second locking elements in the engaged state.

In another example of the heat shrinkable wrap, the first and the second locking elements comprise multiple teeth and edges formed in the first and the second locking feature to interlock with each other.

The advantage of this feature is that it prevents the opening of the heat shrinkable wrap when it shrinks and during its service.

In another example of the heat shrinkable wrap, the first and second locking features are provided at an inside surface of the body of the heat shrinkable wrap when the locking features are connected and the heat shrinkable wrap forms a tubular structure.

In another example of the heat shrinkable wrap, the first and second locking features are provided at an outside surface of the body of the heat shrinkable wrap when the locking features are connected and the heat shrinkable wrap forms a tubular structure.

In another example of the heat shrinkable wrap, the locking features are made of thermoplastic material or elastomeric material.

In another example of the heat shrinkable wrap, the thermoplastic material of the locking features has a softening temperature of 140 °C.

In another example of the heat shrinkable wrap, the body comprises thermoplastic material which has a softening temperature of 140 °C.

In another example of the heat shrinkable wrap, the locking features are fixed to the body of the heat shrinkable wrap by gluing.

In another example of the heat shrinkable wrap, the locking features are fixed to the body of the heat shrinkable wrap by gluing, welding, and/or other joining methods.

In another example of the heat shrinkable wrap, the heat shrinkable wrap comprises a flame-retardant material.

The present disclosure also relates to a method of manufacturing a heat shrinkable wrap according to any of the examples described above, the method comprising the following steps: extruding locking feature profiles on top of a tube; beaming the product for cross-linking to provide it with the required strength; heating the product to its softening temperature to allow for deformation; applying air pressure to the internal tube to expand it; directing coolant water on the tube to freeze the polymer chains to stop further expansion of inner tube; and slitting the tube along its longitudinal axis.

The present disclosure also relates to a method of installing a heat shrinkable wrap according to any of the examples described above, the method comprising the following steps: folding the body of the heat shrinkable wrap around a wire harness; connecting the locking features of the heat shrinkable wrap.

In the following, the invention is explained in more detail with reference to the drawings by means of several exemplary embodiments, the various features of which can be combined with one another as desired in accordance with the above explanations. In particular, individual features may be added to the described embodiments in accordance with the above explanations if the effect of these features is necessary for a particular application. Conversely, individual features can be omitted from the described embodiments if the technical effect of these features is not important in a specific application. In the drawings, similar, identical and functionally identical elements are given identical reference signs where appropriate.

In the Figures:
- Fig. 1: shows a cross section of a heat shrinkable wrap in open position;
- Fig. 2: shows a cross section of a heat shrinkable wrap in closed position;
- Fig. 3: shows a cross section of a heat shrinkable wrap in closed position;
- Fig. 4A: shows a cross section of a heat shrinkable wrap in closed position;
- Fig. 4B: shows a cross section of the locking features of the heat shrinkable wrap from Fig. 4A;
- Fig. 5A: shows a cross section of a heat shrinkable wrap in closed position;
- Fig. 5B: shows a cross section of the locking features of the heat shrinkable wrap from Fig. 5A;
- Fig. 6A: shows a cross section of a heat shrinkable wrap in closed position;
- Fig. 6B: shows a cross section of the locking features of the heat shrinkable wrap from Fig. 6A;
- Fig. 7A: shows a cross section of a heat shrinkable wrap in closed position;
- Fig. 7B: shows a cross section of the locking features of the heat shrinkable wrap from Fig. 7A;
- Fig. 8: shows a cross section of the locking features of a heat shrinkable wrap in closed position;
- Fig. 9: shows a cross section of the locking features of a heat shrinkable wrap in closed position;
- Fig. 10: shows a cross section of the locking features of a heat shrinkable wrap in closed position;
- Fig. 11: illustrates a manufacturing process of a heat shrinkable wrap.

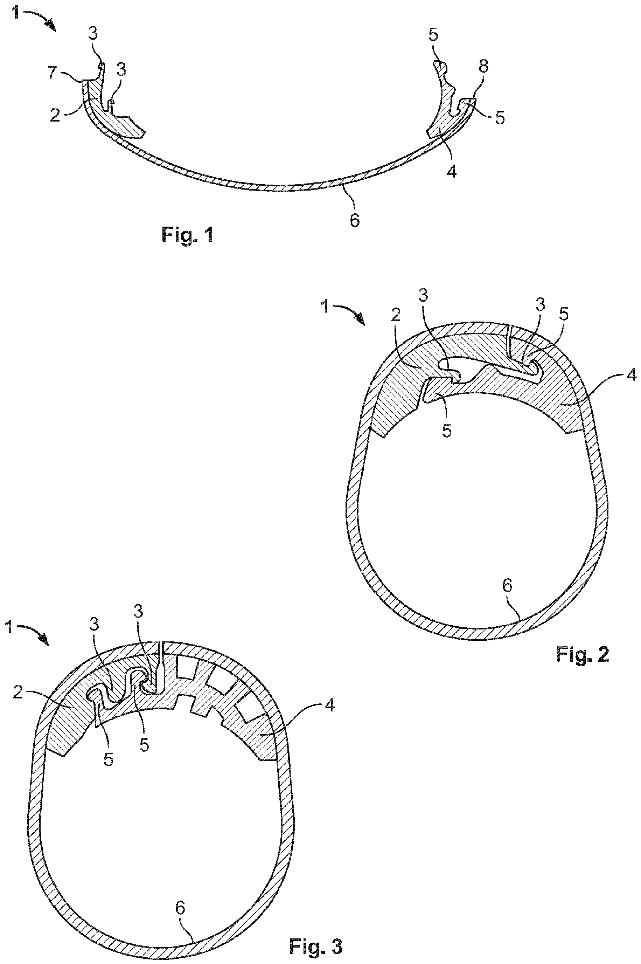

Figure 1 shows a cross section of a heat shrinkable wrap 1 with a body 6, a first locking feature 2 at a first longitudinal edge 7 and a second locking feature 4 at a second longitudinal edge 8 according to the present disclosure. The first locking feature 2 comprises a plurality of first locking elements 3. In the example shown in Figure 1, the first locking feature 2 comprises two first locking elements 3, each of which comprising a terminal which has the shape of a hook. As shown in Figure 1, the hooks of the two first locking elements 3 point in different directions.

The second locking feature 4 comprises a plurality of second locking elements 5. In the example shown in Figure 1, the second locking feature 4 comprises two second locking elements 5. The two second locking elements 5 are shaped in a way such that each second locking element 5 can engage with one first locking element 3 in an engaged state. In Figure 1, the locking elements 3, 5 are not yet engaged.

Figure 2 shows the heat shrinkable wrap 1 with a first locking feature 2 at a first longitudinal edge 7 and a second locking feature 4 at a second longitudinal edge 8 according to the same example as shown in Figure 1. However, in Figure 2 the locking elements 3, 5 are engaged and the heat shrinkable wrap 1 is closed to form a tubular shape with an annular cross section. The first and second locking features 2, 4 are arranged at a surface of the heat shrinkable wrap 1 in a way such that they are surrounded by the heat shrinkable wrap 1 in the engaged state. In other words, the first and second locking features 2, 4 are arranged at the inside surface of the tube formed by the heat shrinkable wrap 1 in the engaged state.

According to an example of the present disclosure, the wrap 1 is made by slitting a regular heat shrink tube in a longitudinal direction. The cut creates a first longitudinal edge 7 and a second longitudinal edge 8 of the heat shrinkable wrap 1. The first and second locking features 2, 4 are made of thermoplastic material or elastomeric material and are fixed to the heat shrinkable wrap 1 along the first longitudinal edge 7 and a second longitudinal edge 8 of the heat shrinkable wrap 1, respectively, by gluing and/or by welding and/or by any other joining method.

Figure 3 shows a cross section of a heat shrinkable wrap 1 with a first locking feature 2 at a first longitudinal edge 7 and a second locking feature 4 at a second longitudinal edge 8 according to another example of the disclosure. The first and second locking features 2, 4 comprise first and second locking elements 3, 5, respectively, which are shaped in a way such that they can engage with one another. In Figure 3, the locking elements 3, 5 are shown in an engaged state.

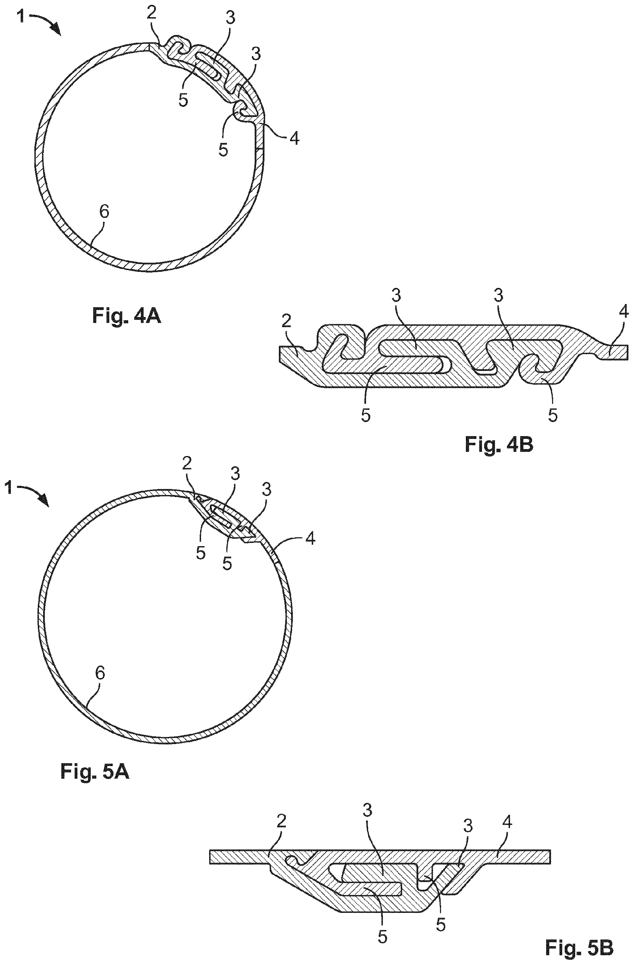

Figure 4A shows another example of a heat shrinkable wrap 1 comprising a body 6, a first locking feature 2 at a first longitudinal edge 7, and a second locking feature 4 at a second longitudinal edge 8. The first and second locking features 2, 4 comprise first and second locking elements 3, 5, respectively, which are shaped in a way such that they can engage with one another. Figure 4B is a closer view of the first and second locking features with first and second locking elements 3, 5, respectively, in an engaged state.

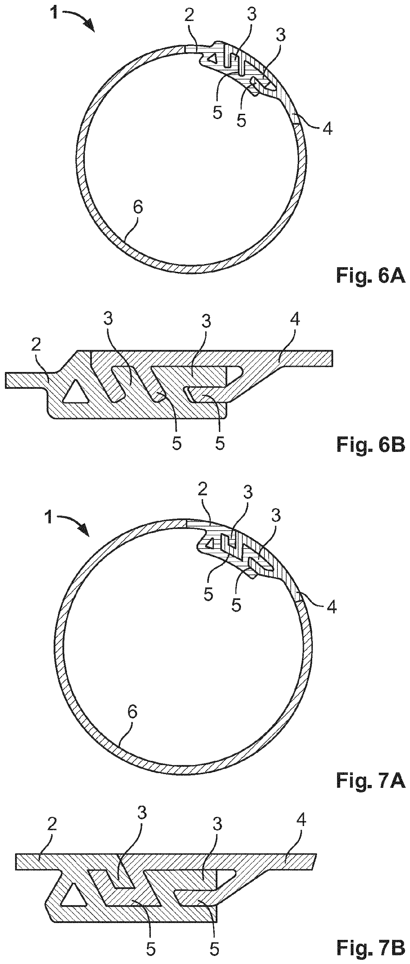

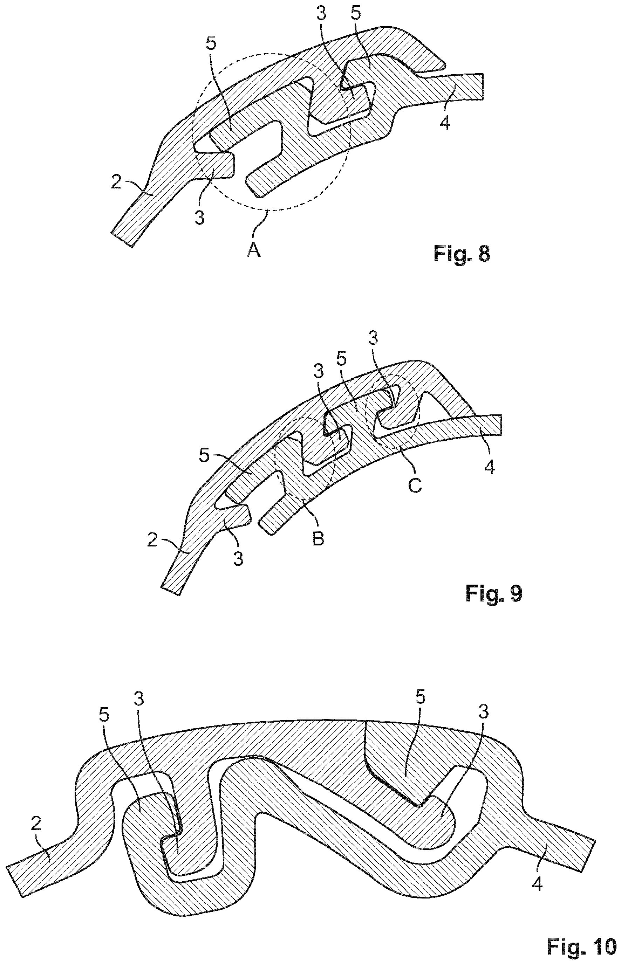

Similarly, Figures 5A, 6A, and 7A show further examples of a heat shrinkable wrap 1 comprising a body 6, a first locking feature 2 at a first longitudinal edge 7, and a second locking feature 4 at a second longitudinal edge 8. The first and second locking features 2, 4 comprise first and second locking elements 3, 5, respectively, which are shaped in a way such that they can engage with one another. Figures 5B, 6B, and 7B are closer views of the respective first and second locking features with first and second locking elements 3, 5, respectively, in an engaged state. Additional examples of first and second locking features with first and second locking elements 3, 5, respectively, are shown in Figures 8 to 10.

The concept is to form a plurality of locking elements in terms of multiple teeth and edges to interlock with each other and prevent the opening of the heat shrinkable wrap 1 when it shrinks and during its service.

For example, the locking features 2, 4 shown in Figure 8 comprise a section A which adds extra stiffness to the lock. The locking features 2, 4 shown in Figure 9 comprise a section B wherein a locking element 5 is provided at an angle opposite to the pulling direction to give extra stiffness. Moreover, the locking features 2, 4 shown in Figure 9 comprise a section C with extra teeth to increase the lock strength.

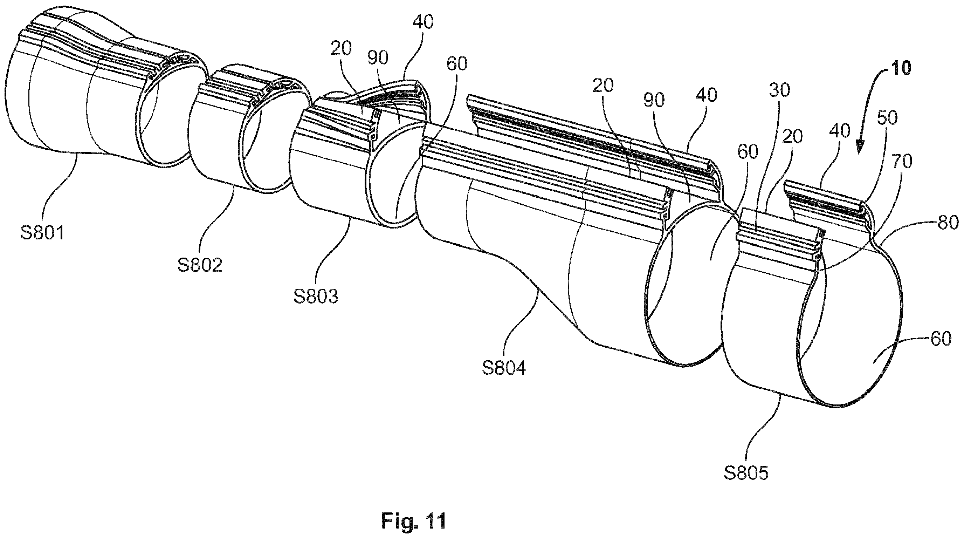

Figure 11 illustrates the manufacturing process of a heat shrinkable wrap 10 according to another example of the present disclosure by extrusion, i.e. the heat shrinkable wrap 10 having a fixed cross-sectional profile is created by pushing material through a die of the desired cross-section. In the heat shrinkable wrap 10 according to this example, the body 60 and the first and second locking features 20, 40 comprising the first and second locking elements 30, 50, respectively, are manufactured from the same material. Alternatively, the heat shrinkable wrap 10 may be coextruded with harder material for the locking feature portion and softer material for the heat shrink body portion.

As shown in Figure 11, the manufacturing process starts in step S801 with extruding a profile on top of a tube with a 10 to 20 % draw down. In step S802, the product of step S801 is then exposed to electron beam radiation to cause the desired level of crosslinking to provide it with the required strength. In step S803, the two halves of the profile on top of the tube are separated from one another to form the first locking feature 20 and the second locking feature 40 of the heat shrinkable wrap 10. As shown in Figure 11, the first locking feature 20 and the second locking feature 40 of the heat shrinkable wrap 10 define two parts of the tube, namely the body 60 and the sacrificial link 90 of the heat shrinkable wrap 10.

In step S804, the product of step S803 is then heated to its softening temperature of about 140 °C to allow deformation. Air pressure is then applied to the tube to expand it. When the tube has reached its final size, coolant water is directed on the tube to freeze the polymer chains to stop further expansion of the tube.

Finally, in step S805, the sacrificial link 90 is removed from the heat shrinkable wrap 10. After this final step, the heat shrinkable wrap 10 comprises the body 60 with a first longitudinal edge 70 and a second longitudinal edge 80. The first locking feature 20 is arranged at the first longitudinal edge 70 of the heat shrinkable wrap 10, and the second locking feature 40 is arranged at the second longitudinal edge 80 of the heat shrinkable wrap 10.

For the final product, the sacrificial link 90 is not relevant and can therefore be removed. However, during the manufacturing process, the sacrificial link 90 is relevant in order to form a complete tube under the profile. This helps to expand the tube with air and eliminate the requirement to stretch the body 60 sideways.

In all of the above described examples of the disclosure, the heat shrinkable wrap 1, 10 is installed by wrapping the body 6, 60 of the heat shrinkable wrap 1, 10 around a wire harness bundle and securing the longitudinal edges 7, 8, 70, 80 of the heat shrinkable wrap 1, 10 with the locking features 2, 4, 20, 40 to form a tube. After locking the longitudinal edges 7, 8, 70, 80, heat is applied to the body 6, 60 of the heat shrinkable wrap 1, 10 so that the tube shrinks and takes the shape of the underlying wire harness substrate.

### List of reference numerals

- 1, 10: heat shrinkable wrap
- 2, 20: first locking feature
- 3, 30: first locking element
- 4, 40: second locking feature
- 5, 50: second locking element
- 6,60: body
- 7, 70: first longitudinal edge
- 8, 80: second longitudinal edge
- 90: sacrificial link

## Claims

1. A heat shrinkable wrap (1, 10) comprising:
a body (6, 60) comprising two longitudinal edges (7, 8, 70, 80) and two transverse edges;
a first locking feature (2, 20) which expands along a first longitudinal edge (7, 70) and a second locking feature (4, 40) which expands along a second longitudinal edge (8, 80);
wherein the body (6, 60) comprises a heat shrink material;
wherein the first locking feature (2, 20) at the first longitudinal edge (7, 70) comprises at least two first locking elements (3, 30) which expand along the first longitudinal edge (7, 70) and the second locking feature (4, 40) at the second longitudinal edge (8, 80) comprises at least two second locking elements (5, 50) which expand along the second longitudinal edge (8, 80);
wherein the first locking elements (3, 30) and the second locking elements (5, 50) are adapted for engaging with each other, for establishing, in an engaged state, at least two connections between the first locking feature (2, 20) and the second locking feature (4, 40);
wherein, when the connection between the first locking feature (2, 20) and the second locking feature (4, 40) is established, the body (6, 60) and the locking features (2, 20, 4, 40) form a tubular structure.

2. The heat shrinkable wrap (1, 10) according to claim 1,
wherein the two locking features (2, 20, 4, 40) are adapted for establishing a formfitting connection between the first locking feature (2, 20) and the second locking feature (4, 40), the formfitting connection between the first locking feature (2, 20) and the second locking feature (4, 40) comprising the at least two connections between the first locking elements (3, 30) and second locking elements (5, 50) in the engaged state.

3. The heat shrinkable wrap (1, 10) according to one of the preceding claims,
wherein the two locking features (2, 20, 4, 40) are adapted for establishing a forcefitting connection between the first locking feature (2, 20) and the second locking feature (4, 40), the forcefitting connection between the first locking feature (2, 20) and the second locking feature (4, 40) comprising the at least two connections between the first locking elements (3, 30) and second locking elements (5, 50) in the engaged state.

4. The heat shrinkable wrap (1, 10) according to one of the preceding claims,
wherein the first locking elements (3, 30) and the second locking elements (5, 50) comprise multiple teeth and edges formed in the first locking feature (2, 20) and the second locking feature (4, 40) to interlock with each other.

5. The heat shrinkable (1, 10) wrap according to one of claims 1 to 5,
wherein the first and second locking features (2, 4, 20, 40) are provided at an inside surface of the body (6, 60) of the heat shrinkable wrap (1, 10) when the locking features (2, 4, 20, 40) are connected and the heat shrinkable wrap (1, 10) forms a tubular structure.

6. The heat shrinkable wrap (1, 10) according to one of claims 1 to 5,
wherein the first and second locking features (2, 4, 20, 40) are provided at an outside surface of the body (6, 60) of the heat shrinkable wrap (1, 10) when the locking features (2, 4, 20, 40) are connected and the heat shrinkable wrap (1, 10) forms a tubular structure.

7. The heat shrinkable wrap (1, 10) according to one of the preceding claims,
wherein the locking features (2, 4, 20, 40) are made of thermoplastic material.

8. The heat shrinkable wrap (1, 10) according to claim 8,
wherein the thermoplastic material of the locking features (2, 4, 20, 40) has a softening temperature of 140 °C.

9. The heat shrinkable wrap (1, 10) according to any of the preceding claims,
wherein the body (6, 60) comprises thermoplastic material which has a softening temperature of 140 °C.

10. The heat shrinkable wrap (1) according to one of claims 1 to 10,
wherein the locking features (2, 4, 20, 40) are fixed to the body (6) of the heat shrinkable wrap (1) by gluing and/or welding and/or co-extruding.

11. The heat shrinkable wrap (1, 10) according to one of the preceding claims,
wherein the heat shrinkable wrap (1, 10) comprises a flame-retardant material.

12. Method of manufacturing a heat shrinkable wrap (10) according to one of the claims 1 to 11, the method comprising the following steps:
providing two locking feature profiles on an outside of a tube such that each locking feature is connected to the tube along a connection line which extends in a longitudinal direction along the tube, the two connection lines defining a body (60) and a sacrificial link (90) as non-overlapping parts of the tube, each of which being bordered by the two connection lines, wherein the surface of the sacrificial link (90) is smaller than or equal to the surface of the body (60);
beaming the product for cross-linking;
heating the product to its softening temperature to allow for deformation;
applying air pressure to an inside of the tube to expand its diameter;
directing coolant water on the tube to freeze the polymer chains to stop further expansion of the tube; and
slitting the sacrificial link (90) at least once along the longitudinal axis of the tube.

13. Method of manufacturing a heat shrinkable wrap (10) according to claim 12, wherein in the step of slitting the sacrificial link (90), a part of the sacrificial link (90) or the whole sacrificial link (90) is removed from the heat shrinkable wrap (10).

14. Method of installing a heat shrinkable wrap (1, 10) according to one of the claims 1 to 11, the method comprising the following steps:
folding the body of the heat shrinkable wrap (1, 10) around a wire harness;
connecting the locking features (2, 4, 20, 40) of the heat shrinkable wrap (1, 10).
